(19) Europäisches Patentamt
European Patent Office
Office européen des brevets

(11) EP 3 333 707 A1

(12) EUROPEAN PATENT APPLICATION

(43) Date of publication:
13.06.2018 Bulletin 2018/24

(51) Int Cl.:
G06F 11/00 (2006.01)     G06N 99/00 (2010.01)

(21) Application number: 16203291.6

(22) Date of filing: 09.12.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: British Telecommunications public limited company
London EC1A 7AJ (GB)

(72) Inventors:
• VIRGINAS, Botond
London EC4V 5BT (GB)
• ROHLFING, David
London EC4V 5BT (GB)
• JENSEN, Kjeld
London EC4V 5BT (GB)
• BULL, Philip
London EC4V 5BT (GB)
• CASSIDY, Stephen
London EC4V 5BT (GB)

(74) Representative: British Telecommunications public limited company
Intellectual Property Department
Ground Floor, Faraday Building
1 Knightrider Street
London EC4V 5BT (GB)

Remarks:
Amended claims in accordance with Rule 137(2) EPC.

(54) **AUTONOMIC METHOD FOR MANAGING A COMPUTING SYSTEM**

(57) This invention provides an autonomic method for controlling an algorithm operating on a computing system, and a device for implementing said method, the method comprising the steps of: generating a new rule for the algorithm, on a periodic basis, using a machine learning process; determining a rate relating to the generation of new rules for the algorithm, wherein said determination is performed at a first sampling rate; detecting a trigger relating to the computing system; and, in response, determining the rate relating to the generation of new rules for the algorithm at a second sampling rate.

Figure 3

**Description**

**Field of the Invention**

The present invention relates to an autonomic method for managing a computing system.

**Background**

Computing systems have been used widely for decades as programmable devices for performing certain processes. These processes typically involve an algorithm acting on an input (e.g. data) to produce an output (e.g. a decision). The algorithm is typically created manually by a human operative.

For each process that must be managed by a computing system, a human operative must act in a supervisory role to ensure that the algorithm is fit for purpose, such that any output is commensurate to the input and satisfying any business requirements. If the operative determines that the algorithm is not suitable for any reason, then he or she must determine what modifications are necessary and then manually make these changes. This is a time-consuming and difficult job. Accordingly, the field of autonomic computing emerged to address this.

An autonomic process is one in which the computing system manages a particular algorithm. The autonomic process may therefore make modifications to the algorithm by utilising machine learning processes, which act on operational data for the computing system and generate algorithm modifications. These algorithm modifications are typically generated based on operator-defined performance criteria. However if these criteria are not well configured, then the machine learning process may generate algorithm modifications at a very low rate (e.g. if an accuracy criterion is too high) or that do not improve the algorithm (e.g. if the accuracy criterion is too low).

The present invention relates to improvements in the field of autonomic methods for managing computing systems.

**Summary of the Invention**

According to a first aspect of the invention, there is provided an autonomic method for controlling an algorithm operating on a computing system, the method comprising the steps of: generating a new rule for the algorithm, on a periodic basis, using a machine learning process; determining a rate relating to the generation of new rules for the algorithm, wherein said determination is performed at a first sampling rate; detecting a trigger relating to the computing system; and, in response, determining the rate relating to the generation of new rules for the algorithm at a second sampling rate.

Embodiments of the invention therefore provide a method in which the sampling rate is dynamic and responsive to a trigger. This has the benefit that the system may sample the current rate at which rules are being generated at a higher sampling rate at significant times during the algorithm's development (e.g. when the rate of rule generation exceeds a threshold or when a new metric is introduced to the data set). This increases the number of data points available to the operative at these significant times, such that more informed decisions can be made regarding the algorithm (e.g. whether performance criteria need to be changed).

The trigger may be the rate relating to the generation of new rules for the algorithm satisfying a threshold. The rate relating to the generation of new rules for the algorithm may be based on a first and second state of the algorithm and a first and second timestamp for the first and second states.

Furthermore, the rate relating to the generation of new rules for the algorithm may be based on the first and second states of the algorithm being applied to a data set. In this manner, the rate of change of the algorithm also factors in the magnitude of the change between two states of the algorithm. The trigger may therefore be responsive to relatively large changes in the algorithm in a single timestep.

The computing system may be a multi-terminal computing system and the application of the first or second state of the algorithm to the data set may produce a result for each terminal of the multi-terminal computing system, and the rate relating to the generation of new rules for the algorithm may be based on a fraction of instances in which application of the first state of the algorithm to the data set produces a different result for a terminal of the multi-terminal computing system than the application of the second state of the algorithm to the data set.

There is also provided a computer program comprising instructions which, when the program is executed by a computer, causes the computer to carry out the method of the first aspect of the invention. The computer program may be stored on a computer-readable data carrier.

According to a second aspect of the invention, there is provided a computing apparatus comprising an input/output interface for receiving diagnostic data relating to a computing system, and a processor configured to carry out the method of the first aspect of the invention.

**Brief Description of the Figures**

In order that the present invention may be better understood, embodiments thereof will now be described, by way of example only, with reference to the accompanying drawings in which:

Figure 1 is a schematic diagram of a computing system of an embodiment of the present invention;
Figure 2 is a schematic diagram of the computing system of Figure 1 in a network of an embodiment of the present invention;
Figure 3 is a flow diagram of a first embodiment of a method of the present invention;
Figure 4 is a flow diagram of a second embodiment of the method of the present invention;
Figure 5 is a flow diagram of an autonomic algorithm used in the method of Figure 4;
Figure 6 is a flow diagram of a machine learning process used to develop the autonomic algorithm of Figure 5; and
Figure 7 is a series of charts representing an initial tuning process used in the machine learning process of Figure 6.

**Detailed Description of Embodiments**

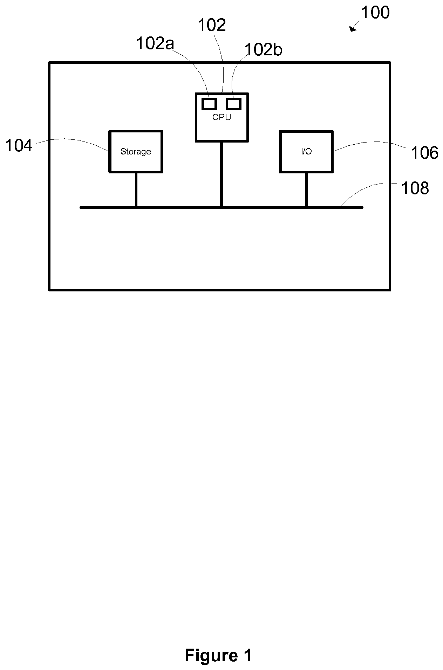

Figure 1 is a block diagram of a computer system 100 suitable for the operation of embodiments of the present invention. A central processor unit (CPU) 102 is communicatively connected to storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data.

Examples of I/O devices connectable to I/O interface 106 include a keyboard, a mouse, a display (such as a monitor) and a network connection.

The CPU 102 further includes a rule generation rate determination module 102a and a sampling rate determination module 102b. These will be explained in more detail below.

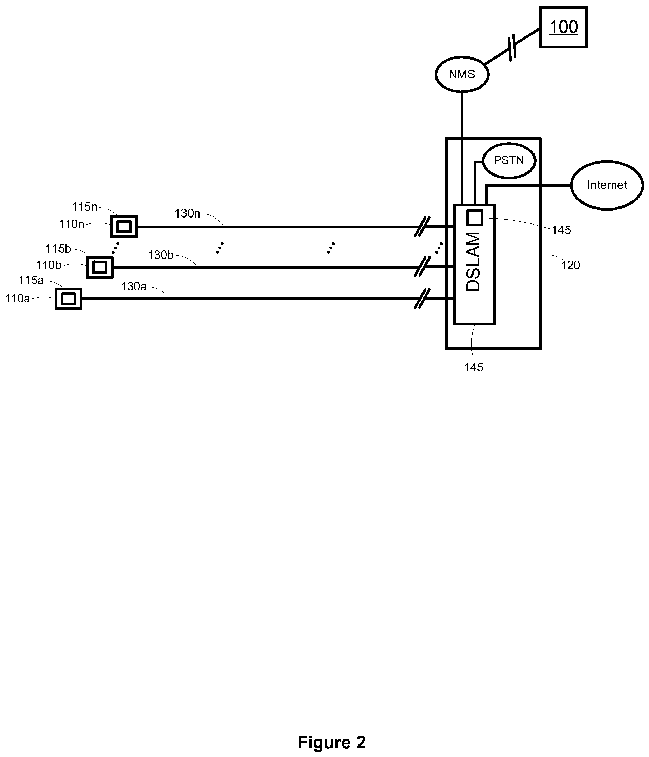

Figure 2 illustrates the computer system 100 in a multi-terminal telecommunications environment 1 of an embodiment of the present invention. The telecommunications system 1 includes a plurality of Customer Premises Equipment (CPE) 110a...110n connected to an exchange 120, each via a copper pair 130a...130n. The copper pair may use any one of the family of xDSL protocols, such as ADSL, VDSL, VDSL2, G.fast, etc, and may also pass through a further DSL element such as a street cabinet and/or distribution point. Furthermore, the connection between the CPEs and the exchange may be carried in part or in full by an optical fibre connection. To cover all scenarios, the term "line" will hereinafter be used to describe any suitable connection between the CPEs 110a...110n and the exchange 120. In the exchange, the lines 130a...130n terminate at an aggregation transceiver device, in this example a Digital Subscriber Line Access Multiplier (DSLAM) 140, which is configured to provide Internet and telephony services to each CPE via each copper pair. The DSLAM thus provides onward connections to the Internet, to a PSTN, and to a Network Management System (NMS).

The CPEs 110a...110n and DSLAM 140 all include a control unit 115a...115n, 145, which are configured to measure certain properties of a modem located in the CPE or DSLAM, or the associated line, and store them in memory. In this embodiment, the control units 115a...115n, 145 are configured to store DSL-related parameters such as Signal to Noise Ratio (SNR), SNR margin, error counts, retrain counts, etc., which are stored in 15-minute bins in the Management Information Base (MIB). In this embodiment, the control units 115a...115n, 145 are also configured to store non-DSL-related parameters such as the line's resistance, moisture levels, etc., which are also stored in memory. Furthermore, each line 130a...130n may include a further control unit (not shown), provided at any point along its length, which is also configured to perform measurements of the various DSL-related and non-DSL-related parameters noted above.

The various control units 115a...115n, 145, 160a...160n are all configured to report their stored DSL-related and non-DSL-related parameters to the NMS. In this embodiment, the NMS receives this data once per day and each day's data is stored, creating a timeline of operational data for subsequent analysis. The NMS typically analyses the DSL-related part of this data in order to optimise the multi-terminal telecommunications system via Dynamic Line Management (DLM) procedures.

In an embodiment of the present invention, the computer system 100 is configured to retrieve this data from the NMS and store it as a vector of quantities, hereinafter designated 'x'. The computer system 100 uses data x in an autonomic process to control the telecommunications system 1, and an example will now be given. In this example telecommunications system 1, a user of one CPE may terminate their service with the Network Operator. The user's line may remain inactive, or the user may be switched to a service provided by another Network Operator (where the telecommunications system is unbundled and services can be provided by several Network Operators along the same line). In any case, the user may want to request that their service be provided again by the original Network Operator. As some time has passed since the original Network Operator served that user via that line, the Network Operator must decide whether to a) automatically restart the service without sending out an engineer, or b) send an engineer out to inspect the line and associated infrastructure and manually restart it. There is a greater chance of the line developing a fault with option a) over option b), and such a fault would have a negative impact on the customer experience. However, there is a greater financial cost associated with option b) over option a). Accordingly, the Network Operator must make a decision on which lines it would be beneficial to use option a) over option b).

In this embodiment, an algorithm is used to decide whether the Network Operator should automatically restart the service or send an engineer to manually restart it. This algorithm may take into account, for example, the amount of time that has passed since the Network Operator terminated service to that user, DSL fault statistics of neighbouring lines, and the various DSL-related and non-DSL-related data noted above. The algorithm thus takes the stored diagnostic data x as an input and outputs either option a) or option b).

The Network Operator may then act upon this output. With either option a) or option b), there are two possible outcomes. One option is a success, which in this example means that the service is successfully restarted without a fault occurring in the near future. The second option is a failure, in which the service does not successfully restart and enters a fault state either immediately or shortly after restarting. One characteristic of this system is that the probabilities of success and failure when choosing option a), i.e. to automatically restart the service rather than sending an engineer, are correlated with the data x. However, the probabilities of success and failure when choosing option b), i.e. to send an engineer to manually restart the line, are not correlated with the data x. The aim therefore is to optimise the algorithm as a function of x, which predicts how likely option a) is in succeeding and base the decision whether to opt for option a) or b) depending on policy criteria specifying what constitutes an acceptable proportion of failures.

The autonomic process is configured to analyse stored diagnostic data x for the telecommunications system 1 (e.g. historical diagnostic data that has been collected at the NMS), and determine whether the current algorithm should be changed. In this embodiment, the autonomic process starts with an initial algorithm that has been manually created for deciding whether to automatically restart the service or send an engineer. The initial algorithm (hereinafter, "$V_0$") may be applied to the stored data x on the multi-terminal telecommunications system 1 and output a decision (option a) or option b)) for each line in the telecommunications system 1. In one example, the initial algorithm $V_0$ is based on the following:

  1. Retrieve parameters V_AGEOFSTOP, V_DCVOLTAGEBE, V_DCVOTLAGEAB, V_CAPACITANCEBALANCE, V_U2DCPE, V1_DIS, V_NTSA, V TOK-1, V_CAPACITANCEAB, V_DCCURRENTAB
  2. Apply weightings to each parameter
  3. Add each weighted parameter; and
  4. If greater than a threshold, output decision a); if lower than a threshold, output decision b).

In the above algorithm, (in which the letters 'A' and 'B' are each representative of one copper wire in a pair forming a DSL), V_AGEOFSTOP is a value of the time elapsed since the DSL has been served by the Network Operator, V_DCVOLTAGEBE is a value of the DC voltage between B and Earth, V_DCVOLTAGEAB is a value representing the voltage between A and B, V_CAPACITANCEBALANCE is a value of the capacitance ratio of A to Earth and B to Earth, V_U2DCPE is a derived value based on the presence of a terminal at the end of the DSL, V1_DIS is a derived value based on the insulation resistance between A and B, V_NTSA is a derived value based on the number of terminals at the end of the DSL, V TOK-1 is a derived value based on the resistance and capacitance of A and B, V_CAPACITANCEAB is a value of the capacitance between A and B, and V_DCCURRENTAB is a value of the DC current between A and B.

In this embodiment, the autonomic process acting on the telecommunications system 1 adjusts the initial algorithm $V_0$ by the addition of a rule. However, the skilled person will understand that the initial algorithm $V_0$ may be modified by the addition or removal of a rule (e.g. adding or removing a particular parameter) or by the variance of an existing rule (e.g. by changing a weighting attributed to one or more parameters or by varying a threshold). The autonomic process implemented by computer system 100 uses a machine learning process to change the algorithm from its initial state, $V_0$, to a new state, $V_1$, based on operator-defined performance criteria.

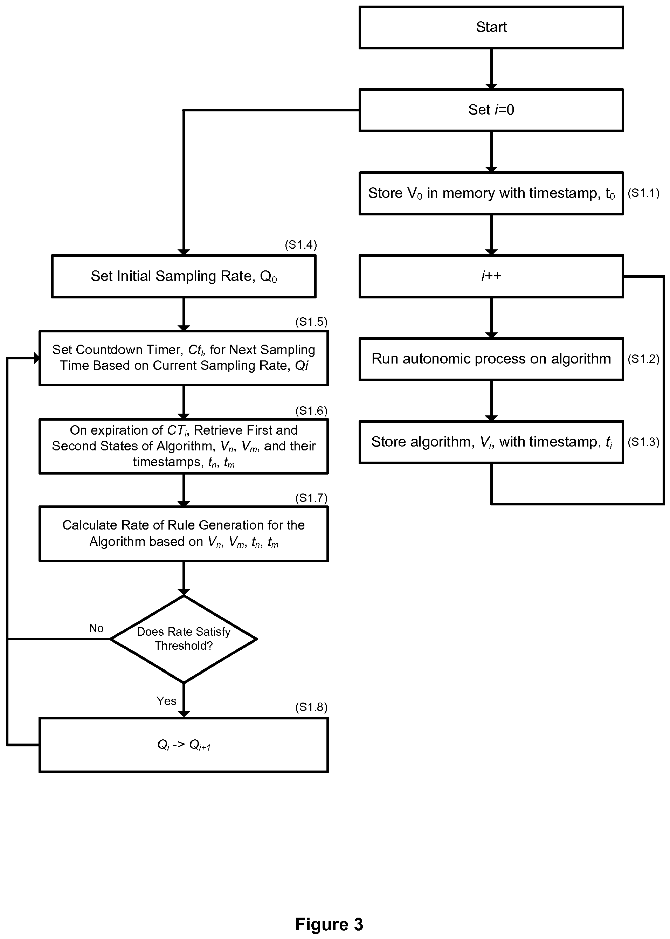

An embodiment of a method of the present invention acting on this example autonomic process will now be described with reference to Figure 3. As a first step (step S1.1), the computing system stores the initial algorithm $V_0$ in memory 104 together with a corresponding timestamp, $t_0$. In the first iteration of the autonomic process, the computing system 100 makes a modification to the algorithm such that it is developed to a new state, $V_1$. This is stored in memory together with a timestamp, $t_1$, of the first iteration of the process. In a second iteration of the autonomic process, the computing system 100 does not make a modification to the algorithm, such that it remains in its current state, $V_1$. This may occur, for example, due to a candidate modification to the algorithm not satisfying operator-defined performance thresholds, such that it is rejected and the algorithm remains the same. The algorithm $V_2$ is stored in memory together with a timestamp, $t_2$, corresponding to the second iteration of the process. This process continues iteratively such that each version of the algorithm, $V_i$, following an iteration of the autonomic process (step S1.2) is stored in memory 104 together with the timestamp, $t_i$, of each iteration (step S1.3).

As noted above, the computing system 100 includes a rule generation rate determination module 102a as part of the CPU 102. This rule generation rate determination module 102a is configured to query memory 104 to determine the state of each version of the algorithm and their corresponding timestamps, and calculate a rate relating to the rule generation. These rates may take the form of, for example:

- An instantaneous rate, e.g.

  ◦ $R_i = \dfrac{1}{t_i - t_{i-1}}$

- An average rate, e.g.

  ◦ $R_{ave} = \dfrac{i-j}{t_i - t_j}$

In this embodiment, the magnitude of each change to the algorithm is normalised such that each change in the algorithm is considered equally (and is equal to 1 in the above example equations). These rates therefore relate to the rate of any change to the algorithm per unit time.

It is also noted above that the CPU 102 includes a sampling rate determination module 102b. The sampling rate is the rate at which a system calculates a particular parameter. In this scenario, it is the rate at which the rule generation rate determination module 102a queries memory 104 in order to determine the current rate of rule generation. The sampling rate determination module 102b therefore controls the rule generation rate determination module 102a by controlling the rate at which it is called upon. The sampling rate, Q, is dynamic and is responsive to a trigger.

In this embodiment, the trigger is a threshold for the instantaneous rate of rule generation (as determined by the rule generation rate determination module 102a), such that the sampling rate, Q, is modified upon the instantaneous rate of rule generation satisfying this threshold. For example, the computing system 100 initially has algorithm $V_0$ and sampling rate $Q_0$ at 1 hour (such that the computing system 100 determines the instantaneous rate of rule generation every hour). The algorithm is developed according to the above autonomic process and each new state of the algorithm is stored in memory 104 together with its corresponding timestamp. The computing system 100 initially queries memory 104 and determines the instantaneous rate of rule generation at sampling rate $Q_0$ (i.e. once every hour). After five hours have passed, the algorithm has developed to $V_{19}$ but the rate of rule generation determined each hour for the first four hours are less than the threshold, such that the sampling rate remains at $Q_0$. However, in the fifth determination of the rate of rule generation by module 102a, the instantaneous rate ($=1/(t_{19}-t_{18})$) is greater than the threshold. Accordingly, the sampling rate $Q_1$ is modified to be 10 minutes (such that the computing system 100 determines the instantaneous rate of rule generation every 10 minutes). The sampling rate $Q_1$ remains at this new value until the instantaneous rate falls below the threshold.

Thus, in general terms, the computing system 100 defines an initial sampling rate $Q_0$ (step S1.4) and sets a countdown timer $CT_0$ (step S1.5) based on the initial sampling rate $Q_0$ (such that if the initial sampling rate is 1 sample per hour, the initial countdown timer starts at 1 hour and counts down to 0). Following expiration of the initial countdown timer $CT_0$, the rule generation rate determination module 102a determines the instantaneous rate of rule generation (step S1.6) based on the current state of the algorithm ($V_n$), the previous state of the algorithm ($V_m$) and their corresponding timestamps ($t_n$, $t_m$). This value is reported to the sampling rate determination module 102b.

The sampling rate determination module 102b then determines if the rate satisfies a threshold (step S1.7). If not, then the process loops back to step S1.5 and the computing system 100 defines a countdown timer based on the current sampling rate, $Q_0$. If the rate does satisfy the threshold, then the sampling rate is modified in step S1.8 to $Q_1$ (where $Q_1$ is different to $Q_0$). The process then loops back to step S1.5 and the countdown timer is set based on the current sampling rate, $Q_1$.

The dynamic sampling rate is useful to the operator of the autonomic process as data relating to the rate of rule generation of an autonomic process is created at a relatively fine granularity at times which are significant to the operator, and at a relatively coarse granularity at other times. Thus, in order to capture more data points at these significant points in the development of the algorithm by the autonomic process, the sampling rate does not have to be high at all times, but is instead dynamic such that it may increase upon a trigger being activated. In the example above, the trigger relates to the rate of rule generation itself, such that when the rate of rule generation is above a threshold, the sampling rate increases and more data points regarding the development of the algorithm are captured at this significant time. An operator may then review these data points and make a more informed decision on how the autonomic process should be calibrated (e.g. whether to make any changes to the performance criteria) than if the data points were captured less often.

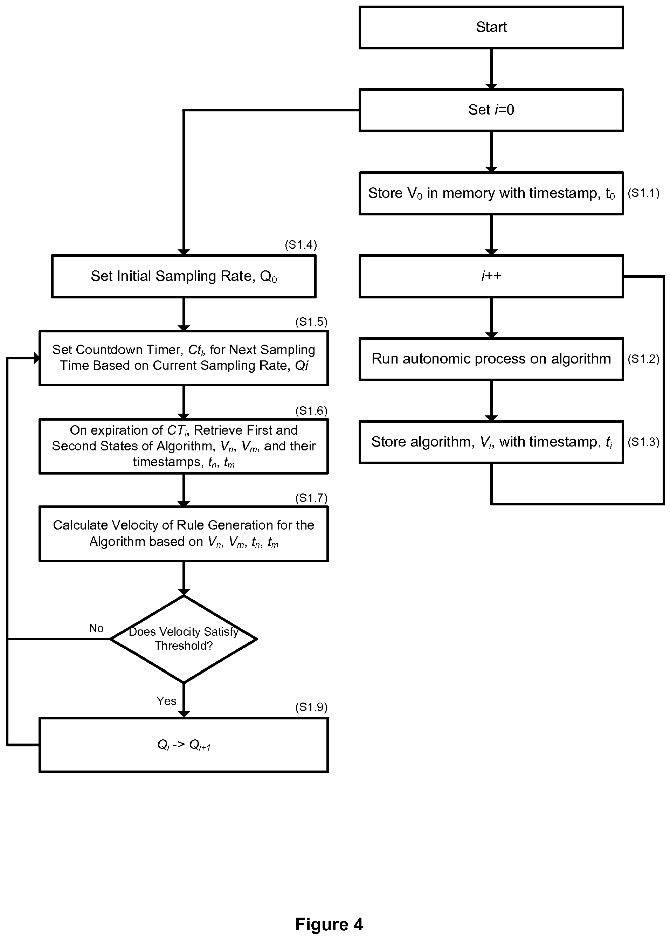

An enhancement to the above embodiment will now be described with reference to Figure 4. In the above embodiment, the magnitude of each change to the algorithm was normalised such that each change in the algorithm was considered equal. In this enhancement, a "distance" between a first and second state of the algorithm is defined, such that the rate of rule generation takes into account the magnitude of the change between its first and second state as well as the time difference. This rate of rule generation may therefore be considered a "velocity".

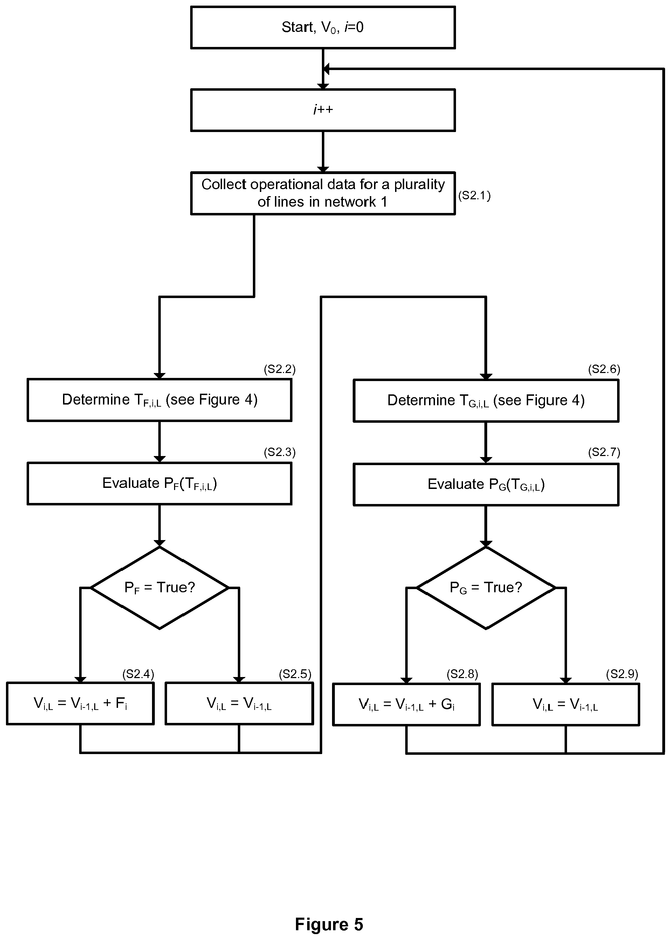

To describe how a magnitude between two states of the algorithm can be measured, it will now be described how the algorithm is developed in more detail (with reference to Figure 5).

As a first step (Figure 5, step S2.1), the computing system 100 collects historical and current operational data $x$ (i.e. DSL-related and non-DSL-related operational data) from the NMS via the I/O interface 106 for all lines in the telecommunications system 1. In this embodiment, the computing system 100 then develops the algorithm such that its initial state $V_0$ becomes the root node of a decision tree, and modifications to this initial state $V_0$ become branches from this root node. The algorithm is developed according to the following function:

$$V_{i,}(x_L) = \begin{cases} F_i(x_L), V_{i-1}(x_L) = (a) \\ G_i(x_L), V_{i-1}(x_L) = (b) \end{cases}$$

Thus, at each process instance i, the computing system 100 evaluates two possible modifications to the algorithm, $F_i$ and $G_i$. These two modifications to the algorithm are generated by a machine learning process (explained below), and the modifications are added as branches to the decision tree if they pass the acceptance criteria. The algorithm may then be applied to any line in the telecommunications system 1, and the output of the final node in the decision tree is the algorithm output.

Accordingly, following step S2.1, the computing system 100 evaluates a modification following an option a) assignment at the previous stage $i$-1. This will now be explained. In step S2.2, a machine learning process operates on the stored diagnostic data, $x$, to produce a candidate modification to the algorithm for that line, designated $T_{F,i}$ (this process is described below). This modification is then tested against the policy-based criteria $a_{t,F}$, $S_{t,F}$, according to the following functions:

$$F_i(x_L) = \begin{cases} T_{F,i}(x_L), p_F(T_{F,i}) = true \\ 1, else \end{cases}$$

$$p_F(T_{F,i}) = \begin{cases} true, A_F(T_{F,i}) > a_{t,F} \text{ and } S_F(T_{F,i}) > s_{t,F} \\ false, else \end{cases}$$

Accordingly, the computing system 100 applies the algorithm including this candidate modification to the stored diagnostic data $x$ in order to generate a set of predicted outcomes if option a) is chosen for all lines in the multi-terminal telecommunications system 1. These predictions may then be evaluated to determine the values of the following contingency matrix:

| Test, $p_F$ | Actual Success | Actual Failure |
|---|---|---|
| Predict Success | $C_{11}$ | $C_{12}$ |
| Predict Failure | $C_{21}$ | $C_{22}$ |

These values are determined by analysing the historical diagnostic data and by using known characteristics of this data. That is, if a particular line is predicted a success using the algorithm with the candidate modification (which was the same result as in the previous stage $i$-1 of the algorithm), then the historical diagnostic data may be analysed to determine if that line was successfully restarted or whether it failed following an automatic restart in order to determine values $C_{11}$ or $C_{12}$ respectively. If the particular line is predicted to fail using the algorithm with the candidate modification, then the values of $C_{21}$ and $C_{22}$ may be estimated since these values do not depend on the diagnostic data $x$ (i.e. a particular percentage of these lines are either successes or failures regardless of their conditions as defined in the diagnostic data).

The computing system 100 may then define values $A_F$ and $S_F$:

$$A_F = \frac{c_{22}}{c_{21} + c_{22}}$$

$$S_F = \frac{c_{21} + c_{22}}{c_{11} + c_{12} + c_{21} + c_{22}}$$

In this embodiment, the first performance criterion, $A_F$, quantifies how accurately the algorithm including the candidate modification can predict failures, whilst the second performance criterion, $S_F$, is a proportion of instances in the historical diagnostic data that are predicted to generate failures. These performance criteria aim to find a subset of lines having a current prediction of option a) which should be reclassified as option b) with a suitably high accuracy.

Once the computing system 100 has determined the values for $A_F$ and $S_F$, it may then evaluate $p_F(T_{F,i})$ (step S2.3). If $p_F(T_{F,i})$ is true (i.e. $A_F$ and $S_F$ satisfy the Network Operator defined performance thresholds) then the candidate modification to the algorithm is accepted (step S2.4). Conversely, if $p_F(T_{F,i})$ is false (i.e. $A_F$ and $S_F$ do not satisfy the Network Operator defined performance thresholds), then the candidate modification is rejected (step S2.5).

To summarise, a candidate algorithm modification $T_{F,i}$ is generated based on a subset of the historical data. A set of predicted outcomes for a plurality of lines is then generated based on another subset of the historical data. If these predictions satisfy certain accuracy and sensitivity performance criteria, then the algorithm including the candidate modification is accepted. The algorithm is thus modified to introduce a new branch to the decision tree, in which the new leaf node is the algorithm including the modification. If the algorithm including the candidate modification does not satisfy the accuracy and sensitivity criteria, then the candidate modification is rejected. The algorithm is thus modified to introduce a new branch to the decision tree, in which the new leaf node is the unmodified algorithm (i.e. the same as the previous algorithm).

Once the modification has been applied or rejected, the computing system 100 then evaluates a modification following an option b) assignment at the previous stage $i$-1. This will now be explained.

Following the determination of one branch node in steps S2.4 and S2.5, the computing system then determines whether a modification according to function $G_i$ (see step S2.6). Before going into detail, a brief background on how the data is generated for this determination will be explained.

It was possible to evaluate the performance of a candidate modification to the algorithm for lines in which the previous state of the algorithm output option a), as the stored historical data may be analysed to determine whether these instances were successes or failures following the automatic restart of the line. However, if the decision from the previous state of the algorithm was option b), then when the operator acted upon this decision resulting in an engineer being sent out and the line manually restarted. In this case, it is not possible to determine what would have happened if option a) had been decided instead. This section details the process when the previous state of the algorithm for a particular line returns option b).

At each process instance, the decision following an evaluation of $V_i$ may be either option a) or option b). A proportion of the lines which have decision of option b) are entered into a 'trial', in which they may be reclassified as option a) depending on the analysis described below. In doing so, the computing system 100 generates a source of enriched data for later analysis. The selection of lines put forward for a trial may be based on a random selection, or may be geographically or temporally based. Thus, for a line which at stage $i$-1 was assigned option b), and that line has been allocated to the trial, then option a) is taken instead and the process loops back round to step s2.1. For these lines (hereinafter known as 'trial lines'), the lines are automatically restarted and the success or failure of this event is recorded. Accordingly, this data may be used in the following iteration of the process.

Returning to the method as shown in Figure 5, the computing system uses a machine learning process on the stored diagnostic data, $x$, to produce a candidate modification to the algorithm, $T_{G,i}$ (explained below), which is then evaluated according to the following functions:

$$G_i(x_L) = \begin{cases} T_{G,i}(x_L), p_G(T_{G,i}) = true \\ 2, else \end{cases}$$

$$p_G(T_{G,i}) = \begin{cases} true, A_G(T_{G,i}) > a_{t,G} \text{ and } S_G(T_{G,i}) > s_{t,G} \\ false, else \end{cases}$$

As the trial lines were previously re-assigned as option a) and were automatically restarted, it is now possible to evaluate, based on this historical operational data, whether the algorithm including the candidate modification would be successful or a failure based on this data. Accordingly, the computing system 100 applies the algorithm including the candidate modification to the subset of historical data relating to the lines participating in the trial to produce the following values:

| Test, $p_F$ | Actual Success | Actual Failure |
|---|---|---|
| Predict Success | $d_{11}$ | $d_{12}$ |
| Predict Failure | $d_{21}$ | $d_{22}$ |

Thus, by forcing a reassignment of these trial lines into the trial, we are able to evaluate performance criteria for lines which would otherwise be impossible. The performance criteria are defined as:

$$A_G = \frac{d_{11}}{d_{11} + d_{12}}$$

$$S_G = \frac{d_{11} + d_{12}}{d_{11} + d_{12} + d_{21} + d_{22}}$$

In this embodiment, the first performance criterion, $A_G$, quantifies how accurately the algorithm including the candidate modification can predict successes, whilst the second performance criterion, $S_G$, is a proportion of instances in the historical diagnostic data that are predicted to succeed. These performance criteria therefore aim to find a subset of lines within the trial having a current prediction of option b) which should be reclassified as option a) with a suitably high accuracy. The computing system 100 may therefore evaluate $p_G(T_{G,i})$ in step S2.7, and, if the performance criteria meet the thresholds, then the candidate modification is accepted. If so, then a second branch is added in the decision tree, stemming from the node representing the previous algorithm, and the new leaf node represents the algorithm including the modification (step S2.8). If not, then the candidate modification is rejected, in which (in step S2.9) the case a second branch is added in the decision tree, stemming from the node representing the previous algorithm, and the new leaf node represents the unmodified algorithm (i.e. the same as the previous algorithm).

Once the modifications $F_i$ and $G_i$ have been applied or rejected, then algorithm $V_i$ can be applied to all lines and a decision of option a) or option b) can be determined. The Network Operator may then act upon this determination.

The above processes are performed at each stage $i$. The new algorithm at stage $i$ is stored in memory 104 together with a corresponding timestamp, and the process loops back and repeats at a later time.

As noted above, the candidate modifications to the algorithms (either $F_{i,L}$ or $G_{i,L}$, depending on the decision at the previous stage of the process) are generated using a machine learning process. This may be via any classification model that is compatible with the structure of the data vector, $x$. The modelling methodology used in the present embodiment is based on a classification tree algorithm, $H$ (sometimes known as a decision tree). The particular classification tree algorithm may be, for example, those used in "Classification and regression trees", Breiman, L., Friedman, J., Olshen, R, Stone, C. (1984); "Data mining with decision trees: theory and applications", "Rokach, L., Maimon, O. (2008); or "Induction of Decision Trees. Machine Learning 1"; Quinlan, J. (1986).

One of the inputs to the classification tree algorithm $H$ when generating a candidate modification to the autonomic process algorithm is known as a 'penalty matrix', $z$, such that $H(z)$. The penalty matrix of this embodiment of the invention is based on the following table:

| **Penalty Matrix** | Actual Success | Actual Failure |
|---|---|---|
| Predict Success | 0 | 1 |
| Predict Failure | $z$ | 0 |

The penalty matrix assigns penalties to misclassifications (i.e. misclassifying whether a DSL may be successfully automatically restarted or not). The penalties for correctly predicting either a success or a failure are therefore 0, and the relative penalties of misclassifying a line as a success or a failure are designated 1 or $z$ respectively. It is the ratio of these two misclassifications that is important, so only a single adjustable parameter $z$ is necessary. Accordingly, if $z$ is increased, misclassification of failures count more strongly than misclassifications of successes in the classification tree algorithm when generating candidate modifications, $T_{F,i}$, $T_{G,i}$. This encourages a tendency towards generating modifications which classify fewer lines as failures, but with a higher prediction accuracy. Conversely, if $z$ is decreased, the classification tree algorithm generates candidate modifications, $T_{F,r}$, $T_{G,i}$, which encourage more failure predictions but with a lower accuracy.

In this embodiment of the invention, the computing system 100 implements an iterative process in order to determine a value for *z* (that is, the input into the classification tree algorithm to generate the new candidate modification, $T_{F,i}$, $T_{G,i}$) which provides a suitable compromise between the two performance criteria. Thus, for each instance of $F_i$ or $G_i$ above (i.e. when generating a new candidate modification for each algorithm for each line at instance *i*), the computing system 100 searches for a suitable value of *z* by evaluating:

$$z_{k+1} = z_k - g_a\left(A_{F,G} - a_{t,F,G}\right) + g_s\left(S_{F,G} - s_{t,F,G}\right)$$

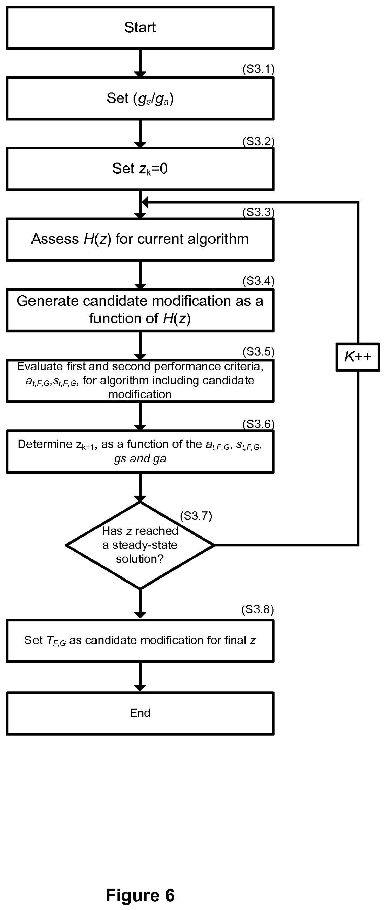

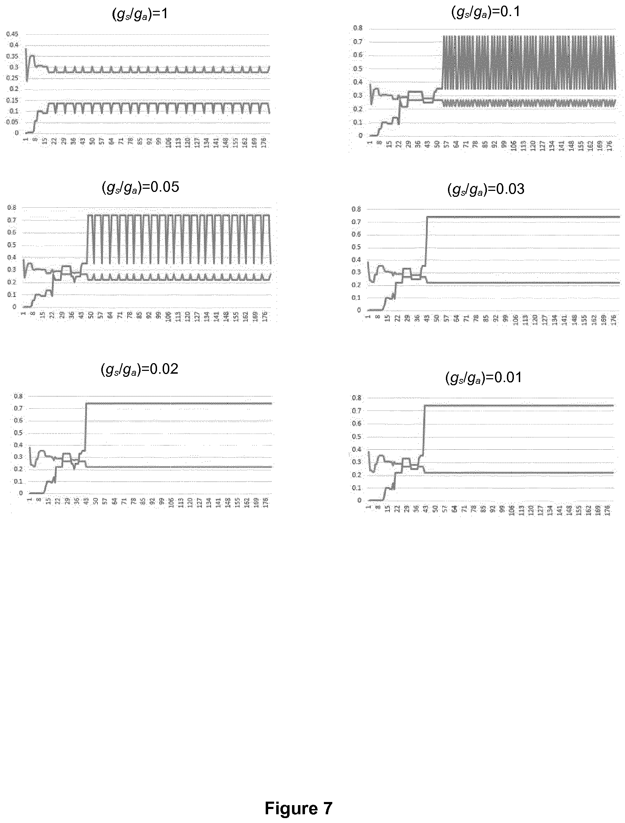

This iterative process will now be explained with reference to Figures 6 and 7. In step S3.1 of a first iteration of the process, the value of a ratio of the two 'gearing' parameters ($g_s/g_a$) in the above parameters is set to, for example, 0.03 (the determination of a suitable ratio of these gearing parameters is explained below). According to the above equation, these gearing parameters determine how much the penalty parameter *z* should be changed in successive iterations of the process when the actual values for $A_{F,G}$ and $S_{F,G}$ differ from performance criteria thresholds. Furthermore, in step S3.2, the value for $Z_k$ is set to 0 for the first iteration of *k*.

As shown in Figure 6, in each iteration of *k*, the computing system 100 assesses $H(Z_k)$ for the current algorithm (section 3.3), and generates a candidate modification to the algorithm based on H$(Z_k)$ (step S3.4). The computing system 100 then generates a set of predicted outcomes by applying the algorithm including the candidate modification to a subset of diagnostic data, *x*, (step S3.5), and determines values for the first and second performance criteria for the current candidate modification (step S3.6). The differences between these two values for the performance criteria and the operator's thresholds $a_{t,F,G}$, $S_{t,F,G}$, multiplied by their respective gearing parameters $g_a$ and $g_s$, determine the new value for $Z_{k+1}$ according to the above equation (step S3.6). In step S3.7, the computing system 100 determines whether the process has reached a steady-state solution (e.g. by determining whether $Z_{k+1}$ is substantially equal to $Z_k$). If not, then the process loops back to step S3.3 and the computing system 100 repeats the above process using a new value for $Z_k$.

The gearing parameters therefore determine how much the penalty parameter z should be changed in each iteration of k when the actual values for $A_{F,G}$ and $S_{F,G}$, differ from performance thresholds. Thus, if $A_{F,G} < a_{t,F,G}$ then the term $g_a(A_{F,G} - a_{t,F,G})$ in the above equation will increase the penalty for misclassifying failures, which in the next iteration of k should increase $A_{F,G}$. Similarly, if $S_{F,G} < s_{t,F,G}$, then the term $g_s(S_{F,G} - s_{t,F,G})$ in the above equation will increase the number of lines predicted to fail, which in the next iteration of k should increase $S_{F,G}$.

Thus, after several iterations, the computing system 100 arrives at a steady-state solution in which $Z_{k+1}$ is equal to or substantially equal to $Z_k$. At this point, the following equation applies:

$$\frac{A_{F,G} - a_{F,G}}{S_{F,G} - s_{F,G}} = \frac{g_s}{g_a}$$

The modification to the algorithm generated once the value for z had reached such a steady-state becomes the candidate modification, $T_{F,G}$, in step S3.8 to be evaluated against the accuracy and sensitivity performance criteria (as discussed above).

The ratio of the gearing parameters $g_s/g_a$ is important as it determines how much the penalty parameter *z* should be changed in each iteration of *k* when the actual values for $A_{F,G}$ and $S_{F,G}$, differ from performance thresholds. In an enhancement to the above method, the computing system 100 determines what gearing ratio to use. Accordingly, in an initial tuning process (which doesn't result in a new candidate modification to the algorithm but is merely designed to find a suitable gearing parameter), the above process is repeated for a plurality of different ratios of gearing parameters, of $g_s/g_a$ = 0.01, 0.02, 0.03, 0.05, 0.1 and 1. The values of $A_{F,G} - a_{F,G}$ and $S_{F,G} - S_{F,G}$ at each instance of k for the above ratios are shown in the various graphs of Figure 7. As is clear, when the ratio of gearing parameters is too high, at 0.05, 0.1 or 1, the iterative process cannot find a steady state solution as the values rise and fall sharply across several iterations. However, for several other ratios of gearing parameters, namely 0.03, 0.02 and 0.01, the iterative process finds a steady state solution.

In this embodiment, the computing system 100 selects the greatest gearing ratio which returns a steady-state solution (e.g. 0.03) as the gearing ratio to use when generating candidate modifications to the algorithm. Thus, after this initial tuning process, the gearing ratio has been selected and candidate modifications may be generated and evaluated in each iteration of i.

This initial tuning process ensures that machine learning process is able to arrive at a candidate modification within a suitable time period (i.e. within a suitable number of iterations of k).

In a further enhancement, the gearing ratio may be re-determined periodically using the same process but on more recent operational data. This ensures that the gearing ratio is appropriate to the current operating environment. However, this is non-essential. It is still possible, although not optimal, for the computing system 100 to generate candidate modifications based on a gearing ratio which does not find a steady-state solution.

Turning back to Figure 4, it will now be described how the computing system 100 may calculate "distance" and "velocity" metrics between two states of the algorithm in step S1.7. In this embodiment, the computing system 100 is configured to retrieve the current state of the algorithm, $V_i$, and the previous state of the algorithm, $V_{i-1}$, and apply each algorithm to a set of historical data, x. The computing system 100 applies algorithm $V_i$ to a subset of the historical data and generates a set of predictions of option a) or option b) for each terminal in the telecommunications network 1. The computing system 100 then generates a matrix based on these predictions as:

| Prediction | $V_{i-1}(x)=(a)$ | $V_{i-1}(x)=(b)$ |
|---|---|---|
| $V_i(x)=(a)$ | $r_{aa}$ | $r_{ab}$ |
| $V_i(x)=(b)$ | $r_{ba}$ | $r_{bb}$ |

In this matrix, $r_{aa}$ represents the count of instances in which both $V_i(x)$ and $V_{i-1}(x)$ return option (a), $r_{ab}$ represents the count of instances in which $V_i(x)$ returns option (a) but $V_{i-1}(x)$ returns option (b), and so on. Using this approach, the computing system 100 may therefore define a distance between the two states of the algorithm as the fraction of instances that that were classified differently by the two states, i.e.

$$D(V_i, V_{i-1}) = \frac{r_{12} + r_{21}}{r_{11} + r_{12} + r_{21} + r_{22}}$$

The computing system 100 may then compute a "velocity" metric between these two states, $W(V_i, V_{i-1})$ as:

$$W(V_i, V_{i-1}) = \frac{D(V_i, V_{i-1})}{t_i - t_{i-1}}$$

It is technically advantageous to use this velocity value as a trigger for the sampling rate determination module 102b as it factors in both the rate of change and the magnitude of change between states of the algorithm. A very large change in a small time period may therefore exceed a threshold (which would not have been exceeded if each algorithm change was considered equal) which may then trigger the sampling rate determination module 102b to change the sampling rate at which the computing system 100 monitors the rate of rule generation of the autonomic process.

Once the trigger condition has been satisfied, then the method of this enhanced embodiment may continue in the same manner as the first embodiment (such that the computing system 100 modifies the sampling rate).

The skilled person will understand that the above method of calculating a distance between a first and second state of the algorithm is non-essential. In other implementations, the distance metric may be based on the difference between any quantifiable values derived from the application of each state of the algorithm to a suitable data set for the particular computing system.

In the above embodiments, the sampling rate, Q, is modified in response to the trigger such that the rate increases (or, in other words, the sampling size decreases) when the rate of rule generation exceeds a threshold. The magnitude of the sampling rate change in the above embodiments is merely an example and any change in rate is within the scope of the present invention. In other implementations, the sampling rate change may be a particular percentage of the current rate, or may be a function of the measured velocity.

Furthermore, in the above embodiments, the sampling rate remains at this new value until the rate drops back below the threshold. A variation on this concept would be when the rate drops back below the threshold for N timesteps. However, this is again non-essential.

It is also non-essential that the rate of rule generation be used as a trigger for the change in the sampling rate of the rate of rule generation. In other arrangements, the trigger may be:

- Following the addition of a new metric in the data for the computing system;
- Following a change in the performance criteria for acceptance of a modification to the algorithm of the autonomic process
- Following a change in operation of a parallel process which may influence the computing system.

The skilled person will also understand that the application of the invention to an autonomic process regarding reactivation of DSLs in a telecommunication network is merely an example, and the present invention may be applied in many other scenarios. For example, a data centre may comprise a number of resources which are either operational or dormant. The data centre operator may then decide on whether to automatically deploy the dormant resource to a user, or whether to manually review and configure the resource for deployment. Data may be collected for the data centre (covering, for example, the length of time since the resource was last used and/or operational data) and an algorithm may be used to make the above decision, which may also be developed using a machine learning process. This algorithm may therefore benefit from the advantages of the present invention, in which it is developed periodically by a machine learning process and the sampling rate of the rate of rule generation is dynamic and responsive to a trigger.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. An autonomic method for controlling an algorithm operating on a computing system, the method comprising the steps of:

   generating a new rule for the algorithm, on a periodic basis, using a machine learning process;
   determining a rate relating to the generation of new rules for the algorithm, wherein said determination is performed at a first sampling rate;
   detecting a trigger relating to the computing system; and, in response,
   determining the rate relating to the generation of new rules for the algorithm at a second sampling rate.

2. A method as claimed in Claim 1, wherein the trigger is the rate relating to the generation of new rules for the algorithm satisfying a threshold.

3. A method as claimed in Claim 2, wherein the rate relating to the generation of new rules for the algorithm is based on a first and second state of the algorithm and a first and second timestamp for the first and second states.

4. A method as claimed in Claim 3, wherein the rate relating to the generation of new rules for the algorithm is further based on the first and second states of the algorithm being applied to a data set.

5. A method as claimed in Claim 4, wherein the computing system is a multi-terminal computing system and the application of the first or second state of the algorithm to the data set produces a result for each terminal of the multi-terminal computing system, and the rate relating to the generation of new rules for the algorithm is based on a fraction of instances in which application of the first state of the algorithm to the data set produces a different result for a terminal of the multi-terminal computing system than the application of the second state of the algorithm to the data set.

6.  A computer program comprising instructions which, when the program is executed by a computer, cause the computer to carry out the method of any one of the preceding claims.

7.  A computer-readable data carrier having stored thereon the computer program of Claim 6.

8.  A computing apparatus comprising an input/output interface for receiving diagnostic data relating to a computing system, and a processor configured to carry out the method of any one of Claims 1 to 5.


**Amended claims in accordance with Rule 137(2) EPC.**

1.  An autonomic method for controlling an algorithm operating on a computing system (100), the method comprising the steps of:

    generating a new rule for the algorithm, on a periodic basis, using a machine learning process;
    determining a rate relating to the generation of new rules for the algorithm, wherein said determination is performed at a first sampling rate;
    detecting a trigger relating to the computing system (100); and, in response,
    determining the rate relating to the generation of new rules for the algorithm at a second sampling rate, wherein the first and second sampling rates are different.

2.  A method as claimed in Claim 1, wherein the trigger is the rate relating to the generation of new rules for the algorithm satisfying a threshold.

3.  A method as claimed in Claim 2, wherein the rate relating to the generation of new rules for the algorithm is based on a first and second state of the algorithm and a first and second timestamp for the first and second states.

4.  A method as claimed in Claim 3, wherein the rate relating to the generation of new rules for the algorithm is further based on the first and second states of the algorithm being applied to a data set.

5.  A method as claimed in Claim 4, wherein the computing system (100)is a multi-terminal computing system and the application of the first or second state of the algorithm to the data set produces a result for each terminal of the multi-terminal computing system (100), and the rate relating to the generation of new rules for the algorithm is based on a fraction of instances in which application of the first state of the algorithm to the data set produces a different result for a terminal of the multi-terminal computing system (100)than the application of the second state of the algorithm to the data set.

6.  A computer program comprising instructions which, when the program is executed by a computer, cause the computer to carry out the method of any one of the preceding claims.

7.  A computer-readable data carrier having stored thereon the computer program of Claim 6.

8.  A computing apparatus comprising an input/output interface for receiving diagnostic data relating to a computing system, and a processor configured to carry out the method of any one of Claims 1 to 5.

**Figure 1**

**Figure 2**

Figure 3

```
                                              ┌─────────────────────────────┐
                                              │           Start             │
                                              └─────────────────────────────┘
                                                            │
                                                            ▼
                                              ┌─────────────────────────────┐
                                              │          Set i=0            │
                                              └─────────────────────────────┘
                                                            │
                                                            ▼
                                              ┌─────────────────────────────┐
                                              │ Store V₀ in memory with      │ (S1.1)
                                              │ timestamp, t₀                │
                                              └─────────────────────────────┘
```

(S1.4)

Set Initial Sampling Rate, $Q_0$

$i$++

(S1.5)

Set Countdown Timer, $Ct_i$, for Next Sampling Time Based on Current Sampling Rate, $Qi$

Run autonomic process on algorithm    (S1.2)

(S1.6)

On expiration of $CT_i$, Retrieve First and Second States of Algorithm, $V_n$, $V_m$, and their timestamps, $t_n$, $t_m$

Store algorithm, $V_i$, with timestamp, $t_i$    (S1.3)

(S1.7)

Calculate Velocity of Rule Generation for the Algorithm based on $V_n$, $V_m$, $t_n$, $t_m$

No — Does Velocity Satisfy Threshold?

Yes

(S1.9)

$Q_i \rightarrow Q_{i+1}$

**Figure 4**

Start, $V_0$, $i=0$

$i$++

Collect operational data for a plurality of lines in network 1   (S2.1)

(S2.2)

Determine $T_{F,i,L}$ (see Figure 4)

(S2.3)

Evaluate $P_F(T_{F,i,L})$

$P_F$ = True?

(S2.4)

$V_{i,L} = V_{i-1,L} + F_i$

(S2.5)

$V_{i,L} = V_{i-1,L}$

(S2.6)

Determine $T_{G,i,L}$ (see Figure 4)

(S2.7)

Evaluate $P_G(T_{G,i,L})$

$P_G$ = True?

(S2.8)

$V_{i,L} = V_{i-1,L} + G_i$

(S2.9)

$V_{i,L} = V_{i-1,L}$

**Figure 5**

**Figure 6**

$(g_s/g_a)=1$

$(g_s/g_a)=0.1$

$(g_s/g_a)=0.05$

$(g_s/g_a)=0.03$

$(g_s/g_a)=0.02$

$(g_s/g_a)=0.01$

**Figure 7**

Europäisches
Patentamt

European
Patent Office

Office européen
des brevets

# EUROPEAN SEARCH REPORT

Application Number

EP 16 20 3291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/062815 A1 (IVANOVA OLGA [US] ET AL) 3 March 2016 (2016-03-03)<br>* abstract *<br>* figures 3,7 *<br>* paragraphs [0012], [0019] - [0029] *<br>----- | 1-8 | INV.<br>G06F11/00<br>G06N99/00 |
| A | US 2012/209568 A1 (ARNDT KARLA K [US] ET AL) 16 August 2012 (2012-08-16)<br>* abstract *<br>* paragraphs [0014] - [0018], [0035], [0046], [0049]; figures 3,4 *<br>----- | 1-8 | |
| A | US 2013/190095 A1 (GADHER BHARAT KUMAR [CA] ET AL) 25 July 2013 (2013-07-25)<br>* abstract *<br>* paragraphs [0081] - [0086] *<br>----- | 1-8 | |

TECHNICAL FIELDS
SEARCHED       (IPC)

G06F
G06N

The present search report has been drawn up for all claims

| Place of search | Date of completion of the search | Examiner |
|---|---|---|
| The Hague | 14 February 2017 | Renault, Sophie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 20 3291

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2017

| Patent document cited in search report | | Publication date | Patent family member(s) | | Publication date |
|---|---|---|---|---|---|
| US 2016062815 | A1 | 03-03-2016 | NONE | | |
| US 2012209568 | A1 | 16-08-2012 | CN | 103354924 A | 16-10-2013 |
| | | | DE | 112012000797 T5 | 14-11-2013 |
| | | | GB | 2499535 A | 21-08-2013 |
| | | | JP | 6025753 B2 | 16-11-2016 |
| | | | JP | 2014507727 A | 27-03-2014 |
| | | | US | 2012209568 A1 | 16-08-2012 |
| | | | US | 2013086431 A1 | 04-04-2013 |
| | | | WO | 2012110918 A1 | 23-08-2012 |
| US 2013190095 | A1 | 25-07-2013 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BREIMAN, L. ; FRIEDMAN, J. ; OLSHEN, R ; STONE, C.** *Classification and regression trees,* 1984

- **ROKACH, L. ; MAIMON, O.** *Data mining with decision trees: theory and applications,* 2008
- **QUINLAN, J.** *Induction of Decision Trees. Machine Learning 1,* 1986